(19) Europäisches Patentamt
European Patent Office
Office européen des brevets

(11) **EP 4 239 934 A1**

(12) **EUROPEAN PATENT APPLICATION**

(43) Date of publication:
**06.09.2023  Bulletin 2023/36**

(21) Application number: **23159914.3**

(22) Date of filing: **03.03.2023**

(51) International Patent Classification (IPC):
**H04L 5/00** $^{(2006.01)}$

(52) Cooperative Patent Classification (CPC):
**H04L 5/0053; H04L 5/001; H04L 5/0091**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2022  US 202263316407 P
12.07.2022  US 202263388603 P
27.07.2022  US 202263392815 P
11.10.2022  US 202263415263 P
25.10.2022  US 202263419283 P
24.01.2023  US 202363440856 P
24.02.2023  US 202318174588**

(71) Applicant: **Samsung Electronics Co., Ltd.
Suwon-si, Gyeonggi-do 16677 (KR)**

(72) Inventors:
• **SABER, Hamid
San Jose, CA, 95134 (US)**
• **BAE, Jung Hyun
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **PDCCH MONITORING IN CARRIER AGGREGATION WITH MULTIPLE SERVING CELLS**

(57)    A system and a method are disclosed for PD-CCH monitoring in carrier aggregation with multiple serving cells. In some embodiments, the method includes: receiving a Carrier Indicator Field (CIF) associated with a first Component Carrier (CC) and a second CC; for a particular Physical Downlink Control Channel (PDCCH) candidate, determining a plurality of Control Channel Elements (CCEs) of the PDCCH candidate based on the CIF; using the CCEs, decoding the PDCCH candidate to receive a PDCCH scheduling a first Physical Downlink Shared Channel (PDSCH), for the first Component Carrier (CC), and a second PDSCH, for the second CC; and receiving the first PDSCH and the second PDSCH based on the PDCCH.

| |
|---|
| Receive a CIF — 730 |
| Determine a plurality of CCEs based on the CIF — 732 |
| Receive a PDCCH scheduling a first PDSCH and a second PDSCH — 734 |
| Receive the first PDSCH and the second PDSCH — 736 |
| Perform blind decoding for the PDCCH candidate — 738 |
| Count the blind decoding toward a count for a reference CC of the first CC and the second CC — 740 |
| Do not count the blind decoding toward a count for the other CC of the first CC and the second CC — 742 |

FIG. 7B

EP 4 239 934 A1

## Description

TECHNICAL FIELD

The disclosure generally relates to wireless communications. More particularly, the subject matter disclosed herein relates to improvements to mobile communications systems.

SUMMARY

In a cellular system operating according to the Fifth Generation of Mobile Telephony (5G) standard promulgated by the 3rd Generation Partnership Project (3GPP), a User Equipment (UE) may receive a Downlink (DL) Control Information (DCI) by monitoring a Physical Downlink (DL) Control Channel (PDCCH) to obtain scheduling information of a Physical DL Shared Channel (PDSCH) and a Physical Uplink (UL) Shared Channel (PUSCH).

Communication with multiple carriers is supported in the form of Carrier Aggregation (CA). In CA, a LTE is able to use multiple Component Carriers (CCs) for DL and UL, allowing the UE to utilize a larger bandwidth than what would be possible using a single CC. There can be multiple modes of CA, including (i) intra-band frequency aggregation with contiguous CCs (ii) intra-band frequency aggregation with non-contiguous CCs, and (iii) interband frequency aggregation with non-contiguous CCs.

The aforementioned categorization of CA modes is dependent on the collection of bands containing the CCs that are used; this collection of bands is referred to as the band combination. The UE initially connects to one cell in the CA, which is referred to as the Primary Cell (PCell). Then, the UE finds and connects to multiple other cells in the CA, referred to as Secondary Cells (SCells).

The aforementioned CA can be extended to Dual Connectivity (DC) which may provide higher per-user throughput by offloading data from a master node to a secondary node in case the master node is overloaded. Offloading data from a macro cell to a small cell is an example use case. In a typical scenario the UE is connected to the master node first and then is connected to the secondary node. EN-DC, NE-DC and NN-DC refer to the DC scenarios where the master node and secondary nodes are an evolved node B (eNB), a next generation node B (gNB), (gNB, eNB) and (gNB, gNB), respectively. Deployment scenarios where the nodes are of different radio access technologies are referred to as MR-DC. NE-DC and EN-DC are two examples of MR-DC.

In some embodiments, multiple scheduled cells are scheduled with one DCI on the scheduling cell. To reduce the control signaling overhead for scheduling downlink or uplink data channels, one DCI may schedule multiple different transport blocks (TB's) in multiple cells in a CA deployment.

One issue with the above approach is that the signaling of certain parameters ordinarily sent per PDSCH may not be clearly defined when a single DCI schedules multiple PDSCHs using cross-carrier scheduling.

To overcome these issues, systems and methods are described herein for defining unambiguous signaling methods for such parameters. The above approaches improve on previous methods because they eliminate the ambiguity that may otherwise be present.

According to an embodiment of the present disclosure, there is provided a method, including: receiving a Carrier Indicator Field (CIF) associated with a first Component Carrier (CC) and a second CC; for a particular Physical Downlink Control Channel (PDCCH) candidate, determining a plurality of Control Channel Elements (CCEs) of the PDCCH candidate based on the CIF; using the CCEs, decoding the PDCCH candidate to receive a PDCCH scheduling a first Physical Downlink Shared Channel (PDSCH), for the first Component Carrier (CC), and a second PDSCH, for the second CC; and receiving the first PDSCH and the second PDSCH based on the PDCCH.

In some embodiments: the receiving of the CIF includes receiving the CIF by a User Equipment (LTE); and the UE is Radio Resource Control (RRC) configured with an association between: the CIF; and a plurality of CCs including the first CC and the second CC.

In some embodiments, the method includes: performing blind decoding for the PDCCH candidate; and counting the blind decoding toward a count for a reference CC of the first CC and the second CC, and not counting the blind decoding toward a count for the other CC of the first CC and the second CC.

In some embodiments, the method further includes counting the Control Channel Elements (CCEs) of the PDCCH candidate toward a count for a reference CC of the first CC and the second CC, and not counting the CCEs of the PDCCH candidate toward a count for the other CC of the first CC and the second CC.

In some embodiments, the reference CC is determined by RRC configuration.

In some embodiments, the reference CC is selected from among CCs associated with the CIF.

In some embodiments: the PDCCH is transmitted on a third CC; the first CC is linked to the third CC; the second CC is not linked to the third CC; and the first CC is the reference CC.

According to an embodiment of the present disclosure, there is provided a User Equipment (UE) including: one or more processors; and a memory storing instructions which, when executed by the one or more processors, cause performance of: receiving a Carrier Indicator Field (CIF) associated with a first Component Carrier (CC) and a second CC; for a particular PDCCH candidate, determining a plurality of CCEs of the PDCCH candidate based on the CIF; using the CCEs, decoding the PDCCH candidate to receive a PDCCH scheduling a first Physical Downlink Shared Channel (PDSCH), for the first Component Carrier (CC), and a second PDSCH, for the second CC; and receiving the first PDSCH and the second PDSCH based on the PDCCH.

In some embodiments, the LTE is Radio Resource Control (RRC) configured with an association between: the CIF; and a plurality of CCs including the first CC and the second CC.

In some embodiments, the instructions, when executed by the one or more processors, cause performance of: performing blind decoding for the PDCCH candidate; and counting the blind decoding toward a count for a reference CC of the first CC and the second CC, and not counting the blind decoding toward a count for the other CC of the first CC and the second CC.

In some embodiments, the instructions, when executed by the one or more processors, further cause performance of: counting the Control Channel Elements (CCEs) of the PDCCH candidate toward a count for a reference CC of the first CC and the second CC, and not counting the CCEs of the PDCCH candidate toward a count for the other CC of the first CC and the second CC.

In some embodiments, the reference CC is determined by RRC configuration.

In some embodiments, the reference CC is selected from among CCs associated with the CIF.

In some embodiments: the PDCCH is transmitted on a third CC; the first CC is linked to the third CC; the second CC is not linked to the third CC; and the first CC is the reference CC.

According to an embodiment of the present disclosure, there is provided a User Equipment (LTE) including: means for processing; and a memory storing instructions which, when executed by the means for processing, cause performance of: receiving a Carrier Indicator Field (CIF) associated with a first Component Carrier (CC) and a second CC; for a particular PDCCH candidate, determining a plurality of CCEs of the PDCCH candidate based on the CIF; using the CCEs, decoding the PDCCH candidate to receive a PDCCH scheduling a first Physical Downlink Shared Channel (PDSCH), for the first Component Carrier (CC), and a second PDSCH, for the second CC; and receiving the first PDSCH and the second PDSCH based on the PDCCH.

In some embodiments, the UE is Radio Resource Control (RRC) configured with an association between: the CIF; and a plurality of CCs including the first CC and the second CC.

In some embodiments, the instructions, when executed by the means for processing, cause performance of: performing blind decoding for the PDCCH candidate; and counting the blind decoding toward a count for a reference CC of the first CC and the second CC, and not counting the blind decoding toward a count for the other CC of the first CC and the second CC.

In some embodiments, the instructions, when executed by the means for processing, further cause performance of: counting the Control Channel Elements (CCEs) of the PDCCH candidate toward a count for a reference CC of the first CC and the second CC, and not counting the CCEs of the PDCCH candidate toward a count for the other CC of the first CC and the second CC.

In some embodiments, the reference CC is determined by RRC configuration.

In some embodiments, the reference CC is selected from among CCs associated with the CIF.

BRIEF DESCRIPTION OF THE DRAWINGS

In the following section, the aspects of the subject matter disclosed herein will be described with reference to exemplary embodiments illustrated in the figures, in which:

FIG. 1 is a system diagram of a deployment, according to some embodiments;
FIG. 2 is a scheduling diagram, according to some embodiments;
FIG. 3 is a scheduling diagram, according to some embodiments;
FIG. 4 is an illustration of PDCCH candidate determination, according to some embodiments;
FIG. 5A is a diagram showing an association between Carrier Indicator Fields (CIFs) and Component Carriers (CCs), according to some embodiments;
FIG. 5B is a diagram showing an association between Carrier Indicator Fields (CIFs) and Component Carriers (CCs), according to some embodiments;
FIG. 6A is a diagram showing an association between Carrier Indicator Fields (CIFs) and Component Carriers (CCs), according to some embodiments;
FIG. 6B is a diagram showing an association between Carrier Indicator Fields (CIFs) and Component Carriers (CCs), according to some embodiments;
FIG. 7A is a diagram of a portion of a wireless system, according to some embodiments;
FIG. 7B is a flow chart of a method, according to some embodiments; and
FIG. 8 is a block diagram of an electronic device in a network environment, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

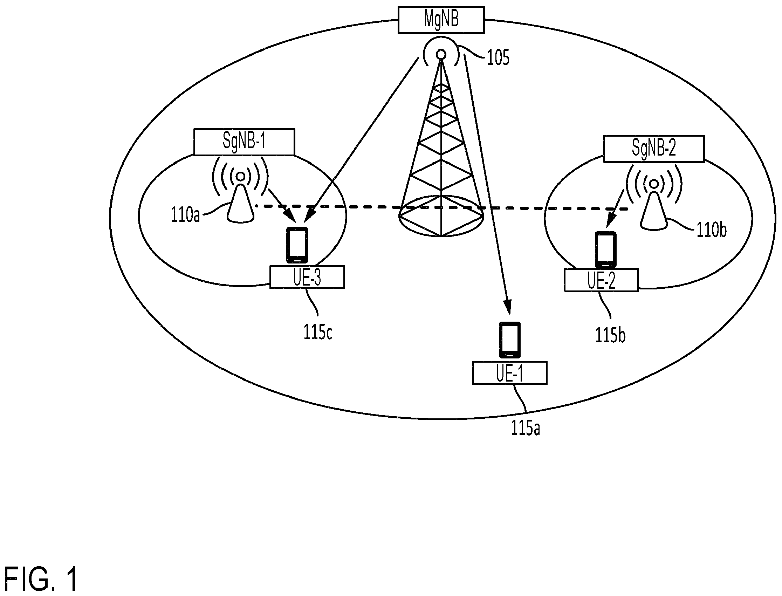

FIG. 1 shows a NN-DC deployment scenario including a master node (MgNB) 105, two secondary nodes (SgNB-1 and SgNB-2) 110a and 110b, and three UEs (UE-1, UE-2, and LTE-3) 115a, 115b, 115c. In the example of FIG. 1, LTE-3 is in DC mode and is simultaneously connected to two New Radio (NR) nodes, i.e., gNBs. The master node (MgNB) 105 configures a set of serving cells within the master cell group (MCG) and each of the secondary nodes (SgNB) 110a, 110b configures a set of serving cells within the secondary cell group (SCG). The primary cell of the MCG is referred to as the PCell while the secondary cells of the MCG are referred to as SCells. The primary cell of the SCG is referred to as PSCell. PCell and PSCell are also referred to as special cells (SpCell).

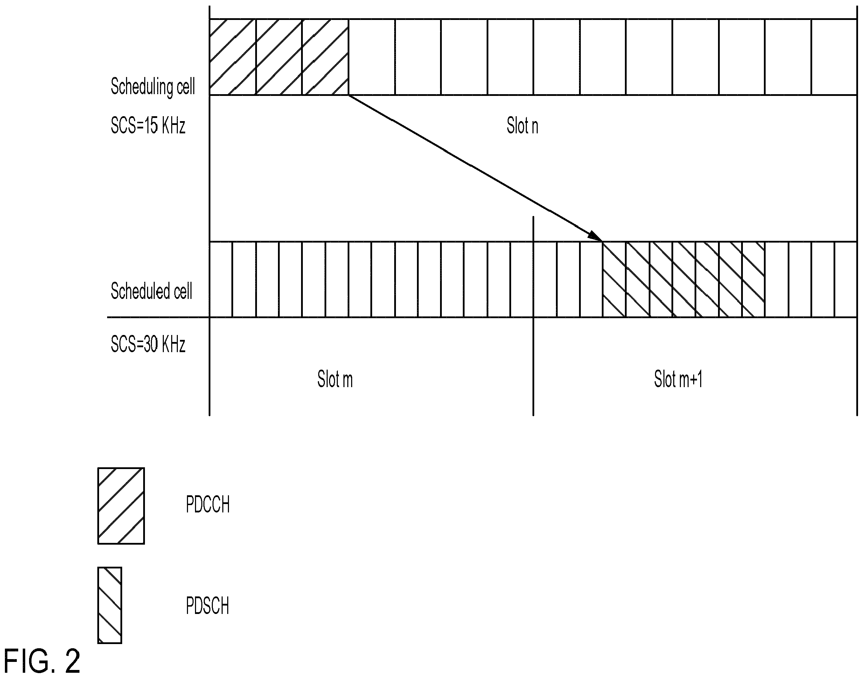

Some embodiments relate to CA deployment scenarios, and the concepts disclosed herein may be extended to each cell group in DC scenarios. In CA, a PDCCH is typically transmitted in each cell to schedule the PDSCH or PUSCH on that cell. This may not be the case, however, in case of cross carrier scheduling (CCS) where a cell, referred to as the scheduling cell, transmits a DCI for a different cell, referred to as a scheduled cell. CCS may be done between scheduling cell and scheduled cell with the same or different numerology $\mu_1$ for scheduling cell and $\mu_2$ for the scheduled cell. CCS with different numerologies, i.e., with $\mu_1 \neq \mu_2$, has a strong use case for frequency range (FR1) scheduling FR2. This is because FR1 (e.g., at frequencies below 6 GHz) may have better coverage and it may therefore be more reliable to deliver DL control information on FR1. Cross-carrier scheduling may be an effective way to deliver DL control information for FR2 on FR1. As such, CCS with different numerologies between scheduling cell and the scheduled cell may be of practical value. FIG. 2 shows an example of CCS with different numerologies where a scheduling cell with a subcarrier spacing (SCS) of 15 kHz schedules a scheduled cell of SCS=30 kHz. A PDCCH is transmitted on the first three symbols of slot n of the scheduling cell which schedules a PDSCH on slot m + 1 of the scheduled cell.

Monitoring of DCI to decode PDCCH is done on the search space (SS) of the scheduling cell. In TS 38.213 V17.2.0 of 3GPP spec, the SS is described in clause 10.1 of TS 38.213 V17.2.0.

It may be seen from TS 38.213 V17.2.0 that the search space (SS) is categorized into common SS (CSS) and UE-specific SS (USS). In the current system, the CSS except for Type3 group common (GC) PDCCH SS is monitored only on the primary cell while USS and Type3 CSS may be monitored in all cells. In case of CCS, no SS is monitored in a scheduled cell. In some embodiments, the primary cell is a scheduled cell, and dynamic spectrum sharing (DSS) may be employed.

From the perspective of a LTE, the processing of a DCI to receive a PDSCH or transmit a PUSCH is subject to processing time. In TS 38.214 V17.0.0 of the 3GPP standard, two different LTE processing capabilities (capability 1 (cap#1, or Cap 1, or CAP1) and capability 2 (cap#2, or Cap 2, or CAP2)) are defined as specified in clause 5.3 and 6.4. The capability is in terms of the number of orthogonal frequency-division multiplexing (OFDM) symbols (N1 or N2) a UE requires to process a PDSCH or a PUSCH, and those capabilities depend on several parameters including subcarrier spacing (SCS) or numerology $\mu$. It may be seen that N1 or N2 are smaller for cap#2 (shortened processing time) than for cap#1.

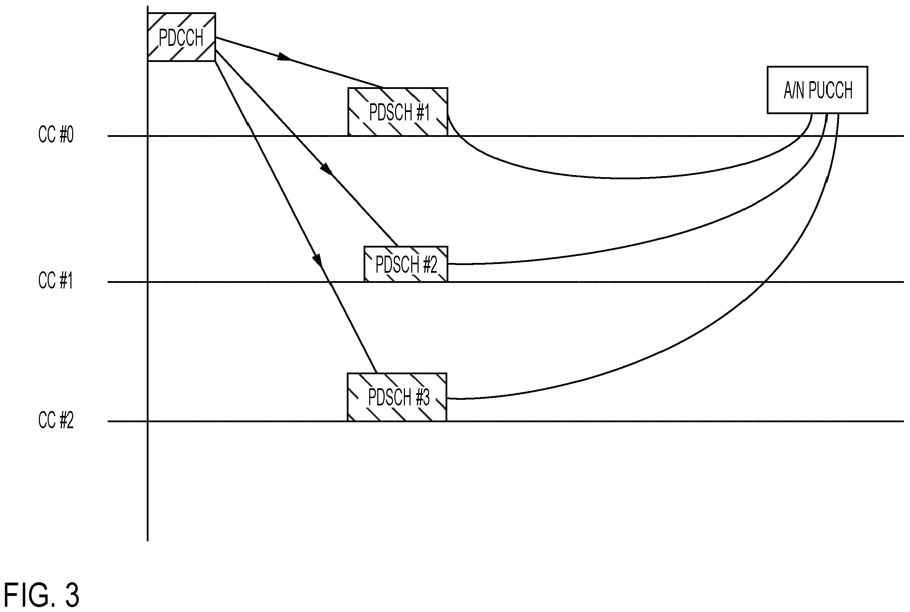

In some embodiments, multiple scheduled cells are scheduled with one DCI on the scheduling cell, as illustrated in FIG. 3. To reduce the control signaling overhead for scheduling downlink or uplink data channels, one DCI may schedule multiple different transport blocks (TB's) in multiple cells in a CA deployment.

When one DCI schedules multiple cells, in one embodiment, parameters in the DCI related to such allocation may be duplicated to have multiple copies. Such allocation parameters may be, but need not be limited to, time domain resource allocation (TDRA), frequency domain resource allocation (FDRA), redundancy version (RV), modulation and coding scheme (MCS), PDCCH-to-PDSCH timing (K0), PDSCH-to-physical UL control signal (PUCCH) timing (K1), PDCCH-to-PUSCH timing (K2), or data assignment index (DAI). Such duplication may increase DCI size and degrade efficiency, which is important for DCIs. In another embodiment, Radio Resource Control (RRC) provides a list of groups of allocation parameters in all cells, and the DCI may indicate an index in the list. Such allocation parameters may be, but need not be limited to, time domain resource allocation (TDRA), frequency domain resource allocation (FDRA), redundancy version (RV), modulation and coding scheme (MCS), PDCCH-to-PDSCH timing (K0), PDSCH-to-physical UL control signal (PUCCH) timing (K1), or PDCCH-to-PUSCH timing (K2). In another embodiment, certain parameters are shared by two cells.

The use of the PDSCH-to-physical UL control signal (PUCCH) timing K1 and PUCCH resource indicator may be affected by whether multiple cells belong to the same PUCCH group. In this case, it may not be advantageous to employ separate PUCCH's. In one embodiment, a single parameter for K1 and a single parameter for the PUCCH Resource Indicator (PRI) are provided, and the actual PUCCH is determined based on the latest PUCCH among hypothetically constructed PUCCH's corresponding to PDSCH numerology and the allocation parameter of each cell. In another embodiment, a single parameter for K1 and a single parameter for the PUCCH resource indicator is provided, and the actual PUCCH is determined based on the earliest PUCCH satisfying the PDSCH processing time of all cells among hypothetically constructed PUCCH's corresponding to the PDSCH numerology and the allocation parameter of each cell. In another embodiment, a certain PDSCH cell is used as a reference cell to determine the actual PUCCH.

If one PUCCH is used, one or more DAI fields may be included in the DCI. If one DAI field is provided, the procedure of constructing Type-2 Hybrid Automatic Repeat Request (HARQ) acknowledgement or negative acknowledgment (ACK/NACK or A/N) (HARQ A/N) codebook provided in TS 38.213 of the 3GPP spec may be modified. For example, the A/N bit location in the codebook may be generated as 'N' consecutive positions where the starting position corresponds to the position of the lowest scheduled cell index, where 'N' is the number of scheduled cells in the DCI. In this case, DAI related operation in the codebook may be skipped for all other scheduled cell indices, and the DAI increment may be one for this DCI. The detailed behavior is defined in clause 9.1.3.1 of TS 38.213 V17.2.0.

In another embodiment, multiple separate PUCCH's are used. A single parameter for K1 and a single parameter for the PUCCH resource indicator may be utilized, and multiple PUCCH's may be constructed based on the single parameter. Multiple DAI fields may be used, since a DAI is with respect to one reference PUCCH slot.

In the following it is assumed that a PDCCH on the scheduling cell schedules N PDSCHs on N serving cells. This disclosure includes two sections, one on search space configuration, and one on Cross Carrier SS linkage, Blind Decoding (BD)/Control Channel Element (CCE) (BD/CCE) limits and overbooking.

Search space configuration

In Rel-15, PDCCH monitoring is based on the notion of search space (SS). The UE may be configured via RRC with common SS (CSS) and/or UE-specific SS (USS). A SS is associated with a control resource set (CORESET), which defines the frequency domain resources in terms of Resource Element Groups (Regs) and Control Channel Elements (CCEs). Although the CORESET is mainly concerned with frequency domain resource determination, it also determines the length of PDCCH candidates in terms of the number of OFDM symbols. For example, a length-3 CORESET specifies that the PDCCH candidates are all over three consecutive OFDM symbols in a slot. A SS determines time domain resources in a slot where a UE monitors PDCCH. For example, a SS may indicate symbol 4 in the slot and if it is associated with a length-3 CORESET this means the UE monitors PDCCHs on symbols 4, 5 and 6 in the slot. Clause 10.1 of TS 38.213 V17.2.0 describes the aspects of SS and CORESET configuration and the related LTE behavior.

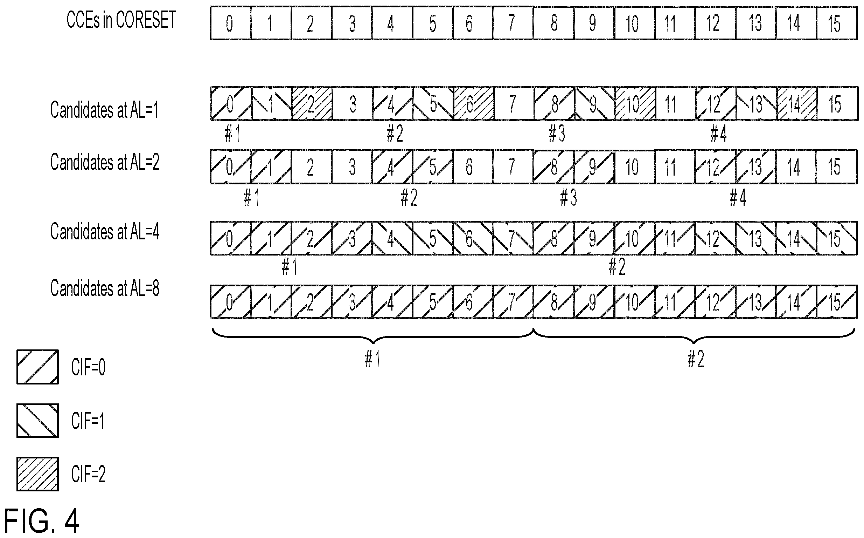

In Rel-15 the resources, e.g., Control Channel Elements (CCEs) of the PDCCH candidates on the scheduling cell corresponding to a scheduled cell are determined according to a function which aims to distribute the candidates uniformly in the CORESET, see TS 38.213 Clause 10.1. Each scheduled cell is scheduled by only one scheduling cell and is configured with a value of a carrier indicator field (CIF) via Radio Resource Control (RRC). In addition to the RRC configuration for determining the PDCCH candidates for each cell, the CIF may be used to indicate the scheduled cell, e.g., via a search space sharing feature in Rel-15 or when the PDCCH candidates corresponding to different scheduled cells fully overlap. FIG. 4 shows PDCCH candidate determination according to Rel-15 on a scheduling cell. PDCCH candidates with different types of shading schedule the scheduling cell (via CIF=0), a first scheduled cell (via CIF=1) and a second scheduled cell (via CIF=2). On top of this semi-static configuration, when search space sharing is used, any of the candidates corresponding to CIF=1 or CIF=2 may schedule the first or second scheduled cell.

The following section presents methods to determine the PDCCH candidate resources for multi-cell scheduling.

In Rel-15, a search space sharing feature is provided, if the LTE declares the corresponding capability. What SS sharing means that, if both CC1 and CC2 are scheduled with CC0, the gNB may use a PDCCH candidate associated with CC1 to transmit a PDCCH scheduling CC2 and vice versa. TS 38.213 of the Fifth Generation of Mobile Telephony (5G) standard promulgated by the 3rd Generation Partnership Project (3GPP) specifies circumstances under which a User Equipment (LTE) may receive a corresponding PDCCH through a PDCCH candidate with CCE aggregation level L . The details of SS sharing are given in clause 10.1 of TS 38.213 V17.2.0.

When PDCCH candidates are associated with a set of scheduled cells, Search Space (SS) sharing may be redefined. In one embodiment, for example, a first PDCCH candidate may be associated with serving cells ($c_1$, .... $c_M$) and a second PDCCH candidates may be associated with serving cells ($c'_1, \ldots, c'_M$) if there is at least one serving cell in one set which is not included in the second set.

With any scheme in which the counting of the number of BD/CCEs per PDCCH candidate is adjusted based on whether or not the PDCCH schedules single or multiple cells, the UE should be aware, prior to decoding, whether a PDCCH candidate is associated with a certain serving cell or with certain serving cells. In one embodiment, each PDCCH candidate is associated with a set of (one or more) serving cells (CIFs). PDCCH candidates may be associated with a set of CIFs, or cells, according to any of the following methods, referred to herein as Method a, Method b, Method c, and Method d.

In Method a, all PDCCH candidates of a SS are associated with a certain combination of serving cells. The association is determined as part of the SS configuration.

For Method a, there is no association of a certain CIF value and a combination of scheduled cells.

If the CIF field is not present in the DCI or if the CIF field is present but the UE is RRC configured to ignore the CIF field, then each PDCCH candidate can only schedule multi-cell, i.e., all the cells in the combination. Otherwise, the PDCCH only schedules a single cell indicated by the CIF field.

Alternatively, a certain CIF value may be associated with a certain combination of scheduled cells.

In Method b, the UE is configured via RRC with an association between the CIF and a combination of serving cells. That is, each CIF is associated with a set of serving cells. The hash function is interpreted such that the PDCCH candidates with a certain CIF are associated with the combination of serving cells with which the CIF is associated.

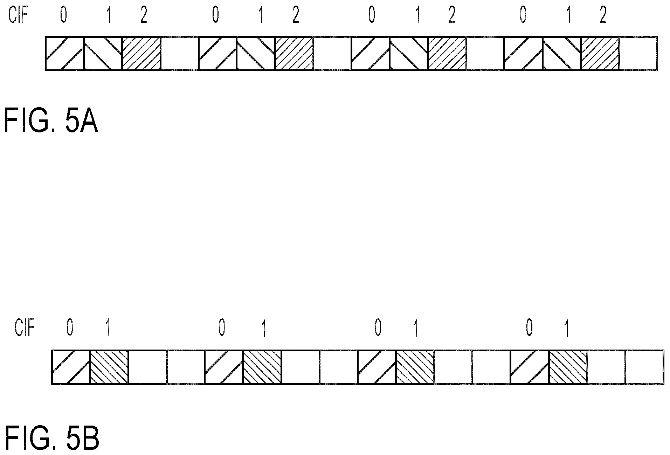

An example is shown in FIG. 5A, which shows the legacy behavior in which CIF values of 0, 1 and 2 are associated with CC0, CC1 and CC2 respectively.

With Method b, CIF=0 may be associated with CC0 and CIF=1 may be associated with (CC1, CC2). In FIG. 5B, the CIF 1 candidates are associated with serving cells (CC1, CC2).

Assuming a maximum number $N_{max}$ of co-scheduled cells for a scheduling cell, there are $2^{N_{max}} - 1$ subsets of cells which can be scheduled by the Multi-Carrier DCI (MC-DCI). Assigning different CIF values to different sets of cells may result in too many PDCCH candidates in the SS. In addition, if the MC-DCI format size changes with the actual number of scheduled cells, there will be too many different DCI sizes to monitor in the SS, which may exceed the DCI budget size. Therefore it may be reasonable to assign different sets of co-scheduled cells the same value of CIF. In case of multiple sets of cells associated with the same CIF value, the UE may be unaware, prior to DCI decoding, which set is scheduled by the MC-DCI. A dynamic indication in the DCI may indicate the actual set of scheduled cells. One way in which this may be accomplished is explained below in the discussion of partial scheduling via bitmap indication in the DCI.

In Method c, the UE is configured with one or more combinations of serving cells. For a given combination($CC_1$, ... $CC_L$), the UE determines the PDCCH candidates for each cell in the combination according to the legacy hash function with the CIF associated with the cell. Once the candidates have been determined, any candidate associated with any of the cells in the combination is re-interpreted to be associated with the combination. There is no CIF to combination of cells association in this method. Different combinations may be disjoint, i.e., no cell appears in two combinations.

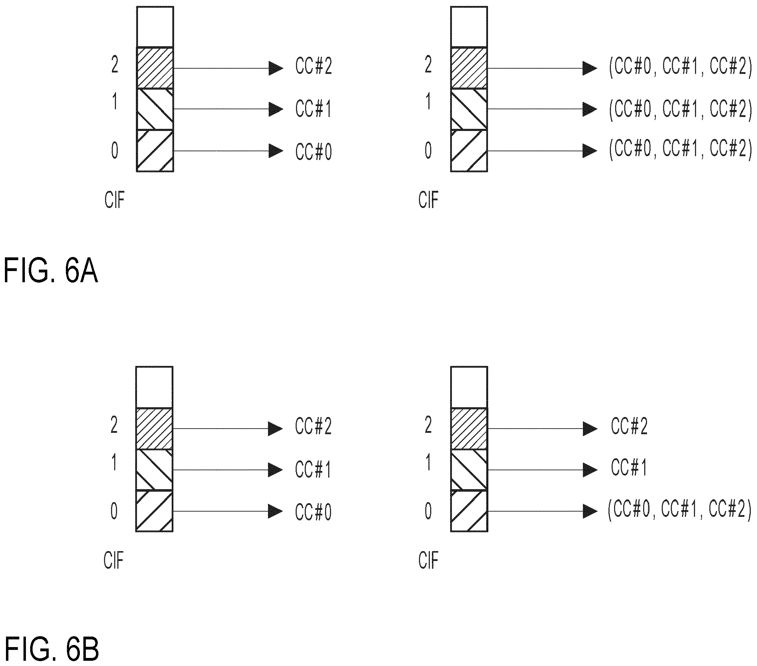

FIG. 6A shows how Method c works. The left and right portions of FIG. 6A show the legacy behavior and the behavior according to Method c, respectively. If the CIF field is not present in the DCI or if the CIF field is present but the UE is RRC configured to ignore the CIF field, then a candidate associated with a combination of cells can either schedule (i) multi-cells, i.e., those cells in the combination or (ii) a single cell determined by the CIF used for the candidate determination (whether (i) or (ii) is applied may be based on RRC configuration). Otherwise, the candidate schedules a single cell according to the associated CIF.

In Method d, the scheduling DCI may only be transmitted on a PDCCH candidate associated with cell index $i$, if it schedules $N$ cells with indices $i_1$, ..., $i_N$, where $i$ is either the smallest cell index or the largest cell index among the N indices. In other words, the UE is configured with a combination of cells for single cell scheduling as in the legacy standard with one modification: A candidate of the cell with the smallest or largest index is now associated with all the cells in the combination.

FIG. 6B shows an example with Method d. If the CIF field is not present in the DCI or is present but the UE is RRC configured to ignore the CIF field, then the PDCCH associated with the combination of cells can only schedule multiple cells, i.e. the cells in the combination. Otherwise, the PDCCH can only schedule the cell indicated by the CIF.

With Method b, Method c, and Method d, different PDCCH candidates associated with different CIF values (different combinations of cells) in the same SS set may fully overlap. In this case, if the CIF field is not present in the DCI or is present but the UE is RRC configured to ignore the CIF field, then if a candidate associated with a CIF corresponding to a combination of cells fully overlaps with a candidate associated with a CIF corresponding to a single cell, the UE cannot differentiate single or multi-cell scheduling. In this case a default rule is established between the UE and the gNB to define the behavior. For example, the rule may be that the detected PDCCH is interpreted as a) single cell scheduling or b) multi-cell scheduling. In another embodiment, such overlapping is defined to be an error case, which means that the UE does not expect that a candidate associated with a CIF corresponding to a first combination of cells fully overlaps with a candidate associated with a CIF corresponding to the second combination of cells (or single cell) if the two combinations are not identical. Otherwise (if the CIF field is not present in the DCI and the UE is not RRC configured to ignore the CIF field), the UE interprets the decoded PDCCH to have scheduled the cells indicated by the CIF field.

Overlapping of different PDCCH candidates associated with different CIFs (or different combination of cells) may also occur across different SS sets. Different search spaces may be configured to be monitored for different DCI formats. For example if SS1 is configured with DCI 1_0/0_0 and SS2 is configured with DCI 1_1/0_1 and a candidate associated with CIF=1 of SS1 fully overlaps with a candidate associated with CIF=2 of SS2, and the UE detects a DCI 1_1 in the candidate, the UE may concluded that the DCI is from SS2, and therefore may interpret the detected DCI to be associated with CIF=2. It is also possible that the aforementioned overlapping is made an error case for the same and/or different SSs. That is, (i) the UE does not expect to be configured with a SS such that two PDCCH candidates associated with two different CIFs fully overlap, and (ii) the LTE does not expect to be configured with two SSs such that a PDCCH candidate of the first SS fully overlaps with a PDCCH candidate associated with a different CIF.

With any of the above methods, if the partial scheduling field in the DCI is configured, the actually scheduled cells are those ones in the associated combination which are indicated to be scheduled in the partial scheduling DCI field. For example, with Method b, when a candidate associated with (CC#0,CC#1,CC#2) schedules multiple PDSCHs on these three cells, if the partial scheduling field is present in the DCI and equals (0,1,1), then there are two PDSCHs scheduled on (CC#1,CC#2).

Cross carrier SS linkage, BD/CCE limits, and overbooking

In Rel-15 the limits for BD/CCE are defined per scheduled cell. Although the current specification works without any modification, it may be argued that if a DCI can schedule two cells simultaneously, the PDCCH should only be counted as ½ for each of the scheduled cells. Therefore whether the UE counts each PDCCH candidate as 1 or ½ depends on the possibility of that candidate scheduling two cells. In one embodiment, the UE is configured via RRC by such indication, and the UE counts the candidates as 1 or ½ accordingly. In general for a PDCCH candidate associated with M serving cells (scheduled cells), the UE counts the BD as 1/M for each cell and the CCEs as the total number of non-overlapping CCEs associated with the candidate divided by M for each scheduled cell. Alternatively, a reference cell, e.g., a cell with smallest or largest serving cell index, may be chosen and the BD/CCE is only counted for that cell, i.e., a value of 1 for the reference cell and 0 for other cells.

In Rel-15, the PDCCH monitoring complexity aspects are defined per scheduled cell. Such a definition may not fully capture the total monitoring complexity when a UE is configured with carrier aggregation (CA). This is based on the assumption that the PDCCH candidates for different scheduled cells may overlap in a SS on the scheduling cell. With overlapping, the total amount of effort the UE takes for PDCCH monitoring may be doubly counted for the scheduled cells. For example, if a CCE is shared between two scheduled cells, both cells benefit from monitoring that CCE, therefore one may argue that that CCE should be counted as less than one for each cell.

The following discussion considers special handling of BD/CCE counting when the candidates of different CIFs overlap. Two methods, referred to as Method 1 and Method 2, are disclosed.

In Method 1, when candidates with CIF=1 in a SS are associated with scheduled cell CC0 and candidates with CIF=2 are associated with scheduled cells (CC0, CC1), then (i) If a CCE of a first candidate scheduling CC0 overlaps with a CCE of a second candidate scheduling (CC0, CC1), that CCE is counted as ½ for CC0 and ½ for CC1. Alternatively, that CCE is counted as 1 only for one reference cell, e.g., CC0 or CC1 and counted as 0 for the other cell; (ii) if a candidate associated with CC0 fully overlaps with a candidate associated with (CC0, CC1), it is counted as ½ for CC0 and ½ for CC1. Alternatively, that PDCCH candidate is counted as 1 BD only for one reference cell, e.g. CC0 or CC1 and counted as 0 BD for the other cell.

In Method 2, when candidates with CIF=$i$ in a SS are associated with a combination of $M_i$ cells, candidates for $i$ = 1, ..., $N$, then (i) if $N$ PDCCH candidates corresponding to different CIFs include a CCE, that CCE is counted as $1/M_k$ for each cell in the combination corresponding to CIF =$k$, where the combination corresponding to CIF =$k$ is the combination with the largest or smallest number of cells, and it is counted as zero for every other cell in other combinations; (ii) if $N$ PDCCH candidates corresponding to different CIFs fully overlap, each candidate is only counted as $1/M_k$ BD for each cell in the combination corresponding to CIF =$k$, where the combination corresponding to CIF =$k$ is the combination with the largest or smallest number of cells, and it is counted as zero BD for every other cell in other combinations.

As an example, if a PDCCH candidate of CIF=0 associated with (CC1, CC2, CC3) overlaps with a PDCCH candidate of CIF=1 associated with (CC2, CC4), and a CCE is common to both candidates, that CCE is counted as 1/3 for CC1, CC2 and CC3, and 0 for CC4. Similarly, if the two candidate fully overlap, the first candidate is counted as 1/3 for CC1, CC2 and CC3, and the second candidate is not counted for CC2 or CC4.

In general, if a PDCCH candidate associated with a CIF value may possibly schedule multiple sets of cells, in one method, the incurred BD/CCE is only counted for one of the cells in a super set. The super set may be either one of the sets among the multiple sets, or the union of the sets, or a reference cell that may or may not be part of the sets of scheduled cells. The reference cell may be configured via RRC, e.g., it may be scheduling cell.

In case of multiple cells in the super set, BD/CCE may be counted as 1/M where M is the number of cells in the super set. CCE counting for the PDCCH candidate may be similar to BD counting. For example, each CCE of the PDCCH candidate may be counted as 1/M for all the cells or as 1 for one reference cell.

In another embodiment involving joint per-combination counting, the UE is configured with a combination of cells and all those cells are either scheduled together by a single DCI or not scheduled. In this case, the BD/CCE may be defined jointly for those cells, which means that no per cell counting and limit is imposed. In other words, the UE is not expected to decode more than $M$ PDCCH candidates associated with the combination of cells and monitor more than $C$ CCEs per for the combination of cells.

In Rel-15 overbooking and SS dropping mechanisms are provided to ensure that the UE does not monitor more than the per scheduled CC BD/CCE limits. However, overbooking may only happen on a PCell. That is, the UE only needs to keep track of the configured number of PDCCH candidates and the BD/CCE count per slot on the PCell, knowing that the count will be less than the limit for SCells. The following cases may be considered.

If legacy per-cell counting is used, the overbooking/dropping may follow Rel-15 behavior, in which each PDCCH candidate scheduling a PCell is counted as 1/M where M is the number of cells, including the PCell, that could be possibly scheduled by the PDCCH candidate (the PDCCH candidate is associated with cells PCell, Scell#1, ..., Scell# $M$ - 1). In order to avoid partial SS monitoring, if a SS is dropped as a result of SS overbooking for the PCell, due to the configuration of a PDCCH candidate in the SS associated with cells (PCell, Scell#1,... Scell#$M$ - 1), the SS is entirely dropped for (Scell#1,....Scell#$M$ - 1).

If joint per-combination counting is used, overbooking may occur for the set of scheduled cells, by counting every PDCCH that counts any of the scheduled cells in the set.

In Rel-15 cross carrier scheduling the UE monitors PDCCH candidates from a search space set on the scheduling cell for decoding DCI formats for a scheduled cell if the UE is configured a 'linked' search space set with the same ID on (the active DL bandwidth part (BWP) of) the scheduled cell. According to Rel-15, a SS on the scheduled cell is linked to a SS on the scheduling cell if they have the same ID; the number of candidates and aggregation levels in the linked SS on the scheduling cell are determined from those configured in the linked SS on the scheduled cell; the SS ID is unique among the BWPs of a serving cell; and the UE applies a linked SS on the scheduling cell if the two DL BWPs which contain the linked SSs on the two cells are both active.

The following presents methods for the above rules to work with MC-DCI in Rel-18. An association between a CIF and a group of cells is assumed, where a CIF value is associated with a group of $M$ scheduled cells, CC1, .. CC#$M$. The SS set applicability to a scheduled cell is defined according to the above rules. A SS in the active BWP of the scheduling cell is said to be applicable to a scheduled cell if it is linked to a SS with the same ID in the active BWP of the scheduled cell.

A typical scenario in which the SS linkage between the scheduling cell and the scheduled cell may break is when BWP switching takes place. Assume that a SS with ID #1 is configured on the active BWP of the scheduling cell and a different SS with the same ID is configured in the active BWP of the scheduled cell. If the gNB switches the active BWP of the scheduled cell, a SS with ID #1 may not be configured in the new BWP. In this case, the SS on the scheduling cell is not linked to the scheduled cell any more. Therefore the UE does not monitor the PDCCH for the scheduled cell on the SS. To resume monitoring, the gNB either needs to reconfigure a SS with ID #1 on the new BWP of the scheduled cell or configure a SS on the scheduling cell that has the same SS ID as one of the SSs configured in the new BWP of the scheduled cell. In any event, to have continuous PDCCH monitoring for a scheduled cell, the gNB may configure the SS sets and BWPs on the scheduling and the scheduled cells such that any two BWPs, one on the scheduling cell and one on the scheduled cell, have at least one SS ID in common.

An advantage of having different SS IDs across the BWPs of the scheduling (or scheduled cell), is that it may be useful to provide the gNB with full flexibility for SS configuration. In particular, changing the BWP on a cell may also change the SCS and the slot duration. This may require a new SS configuration with updated periodicity and a set of Monitoring Occasions (MOs) within the slot. As such, it may be advantageous to have different SS configurations for different BWPs. The SS IDs may then be set to be different as the SS properties are different. Three cases, referred to herein as Case 1, Case 2, and Case 3, may be considered.

In Case 1, the SS set on the scheduling cell is applicable to all of the M co-scheduled cells. This case does not require special consideration. The UE monitors the candidates in the SS for all the co-scheduled cells. BD/CCE counting may be performed according to any of the methods discussed above for BD/CCE counting.

In Case 2, the SS set on the scheduling cell is applicable to none of the $M$ co-scheduled cells. This case does not require special consideration. UE does not monitor the candidates in the SS for all the co-scheduled cells. No BD/CCE counting is performed for any of the co-scheduled cells.

In Case 3, the SS set on the scheduling cell is applicable to some but not all of the M co-scheduled cells.

It may be assumed that the SS set on the scheduling cell is applicable to $M_1$ cells among the $M$ co-scheduled cells. The LTE does not monitor PDCCH for those $M - M_1$ scheduled cells in the SS set regardless of the PDCCH candidate to cell association. This means that the UE is aware, prior to DCI decoding in a PDCCH candidate associated with the $M$ cells, that the DCI cannot schedule the $M - M_1$ cells. BD/CCE counting may be performed, for example, using any of the methods discussed above for BD/CCE counting, with the modification that the PDCCH candidate is associated with the $M - M_1$ cells.

For instance, the candidate may be counted as $\dfrac{1}{M-M_1}$ for each of the $M - M_1$ cells. In another approach the candidate is counted assuming it is associated with the $M$ cells regardless of the number of applicable cells; for example, $1/M$ BD is counted for each of the $M$ cells.

In Rel-15, for a SS configured on the scheduling cell which includes candidates for scheduling a scheduled cell, the number of candidates are taken from the SS with the same ID configured on the scheduled cell. With multi-cell scheduling, if SS0 on a scheduling cell includes candidates associated with scheduled cells $(c_1,...,c_M)$, the number of candidates for each aggregation level is determined as follows. A first SS with SS index $i$ may be configured on a scheduling cell that includes PDCCH candidates associated with a combination of scheduled cells $(c_1, ..., c_M)$. For each scheduled cell $c_i$ in the combination, a second SS with SS index $i$ configured on the scheduled cell may be determined. The number of PDCCH candidates configured in the second SS may be denoted $X_i$. The number of candidates in the first SS on the scheduling cell which are associated with the cell combination is determined from any of the following methods: (i) the min value of $X_i$, or (ii) the maximum value of $X_i$, or (iii) any of the numbers $X_i$ (that is, the UE is not expected to be configured with different values of $X_i$), or (iv) a reference cell $c_j$ among the $M$ cells in the combination is determined, e.g. via RRC configuration or a fixed rule based on serving cell index, and the number of candidates in the first SS on the scheduling cell which are associated with the cell combination is equal to $X_j$ (that is, the reference cell uses legacy behavior to determine the number of candidates associated with the combination).

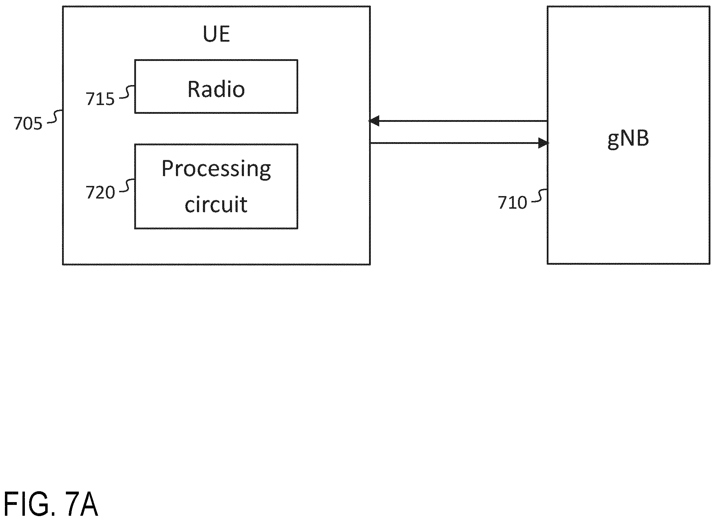

FIG. 7A shows a portion of a wireless system. A user equipment (UE) 705 sends transmissions to a network node (gNB) 710 and receives transmissions from the gNB 710. The UE includes a radio 715 and a processing circuit (or "processor") 720. In operation, the processing circuit may perform various methods described herein, e.g., it may receive (via the radio, as part of transmissions received from the gNB 710) information from the gNB 710, and it may send (via the radio, as part of transmissions transmitted to the gNB 710) information to the gNB 710.

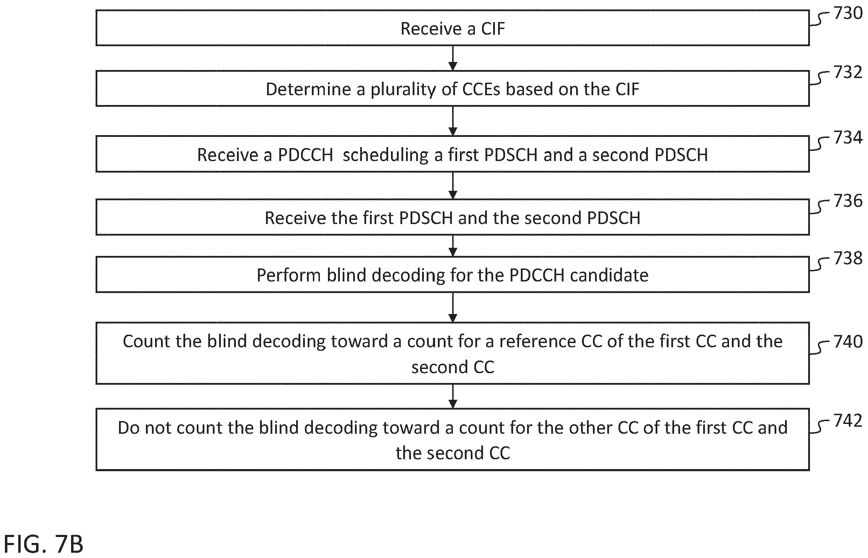

FIG. 7B is a flow chart of a method, in some embodiments. The method includes receiving, at 730, a Carrier Indicator Field (CIF) associated with a first Component Carrier (CC) and a second CC; for a particular Physical Downlink Control Channel (PDCCH) candidate, determining, at 732, a plurality of Control Channel Elements (CCEs) of the PDCCH candidate based on the CIF; using the CCEs, decoding the PDCCH candidate to receive, at 734, a PDCCH scheduling a first Physical Downlink Shared Channel (PDSCH), for the first Component Carrier (CC), and a second PDSCH, for the second CC; and receiving, at 736, the first PDSCH and the second PDSCH based on the PDCCH. The method further includes performing, at 738, blind decoding for a PDCCH candidate; counting, at 740, the blind decoding toward a count for a reference CC of the first CC and the second CC, and, at 742, not counting the blind decoding toward a count for the other CC of the first CC and the second CC.

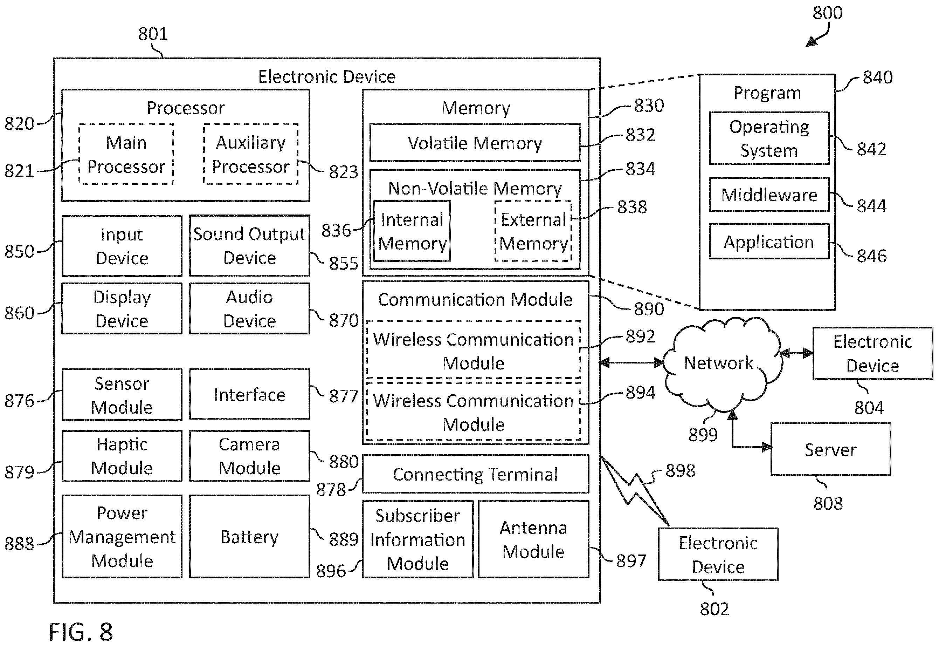

FIG. 8 is a block diagram of an electronic device (e.g., a LTE 705) in a network environment 800, according to an embodiment. Referring to FIG. 8, an electronic device 801 in a network environment 800 may communicate with an electronic device 802 via a first network 898 (e.g., a short-range wireless communication network), or an electronic device 804 or a server 808 via a second network 899 (e.g., a long-range wireless communication network). The electronic device 801 may communicate with the electronic device 804 via the server 808. The electronic device 801 may include a processor 820, a memory 830, an input device 840, a sound output device 855, a display device 860, an audio module 870, a sensor module 876, an interface 877, a haptic module 879, a camera module 880, a power management module 888, a battery 889, a communication module 890, a subscriber identification module (SIM) card 896, or an antenna module 894. In one embodiment, at least one (e.g., the display device 860 or the camera module 880) of the components may be omitted from the electronic device 801, or one or more other components may be added to the electronic device 801. Some of the components may be implemented as a single integrated circuit (IC). For example, the sensor module 876 (e.g., a fingerprint sensor, an iris sensor, or an illuminance sensor) may be embedded in the display device 860 (e.g.,

a display).

The processor 820 may execute software (e.g., a program 840) to control at least one other component (e.g., a hardware or a software component) of the electronic device 801 coupled with the processor 820 and may perform various data processing or computations.

As at least part of the data processing or computations, the processor 820 may load a command or data received from another component (e.g., the sensor module 846 or the communication module 890) in volatile memory 832, process the command or the data stored in the volatile memory 832, and store resulting data in non-volatile memory 834. The processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or execute a particular function. The auxiliary processor 823 may be implemented as being separate from, or a part of, the main processor 821.

The auxiliary processor 823 may control at least some of the functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834.

The program 840 may be stored in the memory 830 as software, and may include, for example, an operating system (OS) 842, middleware 844, or an application 846.

The input device 850 may receive a command or data to be used by another component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. The display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. The audio module 870 may obtain the sound via the input device 850 or output the sound via the sound output device 855 or a headphone of an external electronic device 802 directly (e.g., wired) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device 802 directly (e.g., wired) or wirelessly. The interface 877 may include, for example, a high- definition multimedia interface (HDMI), a universal serial bus (USB) interface, a secure digital (SD) card interface, or an audio interface.

A connecting terminal 878 may include a connector via which the electronic device 801 may be physically connected with the external electronic device 802. The connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus which may be recognized by a user via tactile sensation or kinesthetic sensation. The haptic module 879 may include, for example, a motor, a piezoelectric element, or an electrical stimulator.

The camera module 880 may capture a still image or moving images. The camera module 880 may include one or more lenses, image sensors, image signal processors, or flashes. The power management module 888 may manage power supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the AP) and supports a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as BluetoothTM, wireless-fidelity (Wi-Fi) direct, or a standard of the Infrared Data Association (IrDA)) or the second network 899 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. The antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

Commands or data may be transmitted or received between the electronic device 801 and the external electronic device 804 via the server 808 coupled with the second network 899. Each of the electronic devices 802 and 804 may be a device of a same type as, or a different type, from the electronic device 801. All or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method, comprising:

   receiving a Carrier Indicator Field, CIF, associated with a first Component Carrier, CC, and a second CC;

   for a particular Physical Downlink Control Channel, PDCCH, candidate, determining a plurality of Control Channel Elements, CCEs, of the PDCCH candidate based on the CIF;

   using the CCEs, decoding the PDCCH candidate to receive a PDCCH scheduling a first Physical Downlink Shared Channel, PDSCH, for the first Component Carrier, CC, and a second PDSCH, for the second CC; and

   receiving the first PDSCH and the second PDSCH based on the PDCCH.

2. The method of claim 1, wherein:

   the receiving of the CIF comprises receiving the CIF by a User Equipment, LTE; and
   the UE is Radio Resource Control, RRC, configured with an association between:

      the CIF; and
      a plurality of CCs including the first CC and the second CC.

3. The method of claim 1 or 2, comprising:

   performing blind decoding for the PDCCH candidate; and
   counting the blind decoding toward a count for a reference CC of the first CC and the second CC, and not counting the blind decoding toward a count for the other CC of the first CC and the second CC.

4. The method of claim 3, further comprising counting the Control Channel Elements, CCEs, of the PDCCH candidate toward a count for the reference CC of the first CC and the second CC, and not counting the CCEs of the PDCCH candidate toward a count for the other CC of the first CC and the second CC.

5. The method of claim 3 or 4, wherein the reference CC is determined by RRC configuration.

6. The method of claim 3 or 4, wherein the reference CC is selected from among CCs associated with the CIF.

7. The method of any one of claims 3 to 6, wherein:

   the PDCCH is transmitted on a third CC;
   the first CC is linked to the third CC;
   the second CC is not linked to the third CC; and
   the first CC is the reference CC.

8. A User Equipment, UE, comprising:

   means for processing; and

a memory storing instructions which, when executed by the means for processing, cause performance of the method of any one of claims 1 to 7 .

9. The LTE of claim 8, wherein the LTE is Radio Resource Control, RRC, configured with an association between:

the CIF; and
a plurality of CCs including the first CC and the second CC.

10. The LTE according to claim 8 or 9, wherein the means for processing is one or more processors.

FIG. 1

FIG. 2

FIG. 3

EP 4 239 934 A1

CCEs in CORESET

| 0 | 1 | 2 | 3 | 4 | 5 | 6 | 7 | 8 | 9 | 10 | 11 | 12 | 13 | 14 | 15 |

Candidates at AL=1

| 0 | 1 | 2 | 3 | 4 | 5 | 6 | 7 | 8 | 9 | 10 | 11 | 12 | 13 | 14 | 15 |

#1　　　　　#2　　　　　#3　　　　　#4

Candidates at AL=2

| 0 | 1 | 2 | 3 | 4 | 5 | 6 | 7 | 8 | 9 | 10 | 11 | 12 | 13 | 14 | 15 |

#1　　　　　#2　　　　　#3　　　　　#4

Candidates at AL=4

| 0 | 1 | 2 | 3 | 4 | 5 | 6 | 7 | 8 | 9 | 10 | 11 | 12 | 13 | 14 | 15 |

#1　　　　　　　　#2

Candidates at AL=8

| 0 | 1 | 2 | 3 | 4 | 5 | 6 | 7 | 8 | 9 | 10 | 11 | 12 | 13 | 14 | 15 |

#1　　　　　　　　#2

CIF=0

CIF=1

CIF=2

FIG. 4

CIF    0    1    2        0    1    2        0    1    2        0    1    2

FIG. 5A

CIF    0    1            0    1            0    1            0    1

FIG. 5B

2 → CC#2

1 → CC#1

0 → CC#0

CIF

2 → (CC#0, CC#1, CC#2)

1 → (CC#0, CC#1, CC#2)

0 → (CC#0, CC#1, CC#2)

CIF

FIG. 6A

2 → CC#2

1 → CC#1

0 → CC#0

CIF

2 → CC#2

1 → CC#1

0 → (CC#0, CC#1, CC#2)

CIF

FIG. 6B

EP 4 239 934 A1

UE

715 ⌐ Radio

705 ⌐

720 ⌐ Processing circuit

gNB

710 ⌐

FIG. 7A

```
┌─────────────────────────────────────────────────────────────────────┐
│                          Receive a CIF                                │──╴730
└─────────────────────────────────────────────────────────────────────┘
                                   │
                                   ▼
┌─────────────────────────────────────────────────────────────────────┐
│            Determine a plurality of CCEs based on the CIF             │──╴732
└─────────────────────────────────────────────────────────────────────┘
                                   │
                                   ▼
┌─────────────────────────────────────────────────────────────────────┐
│         Receive a PDCCH  scheduling a first PDSCH and a second PDSCH  │──╴734
└─────────────────────────────────────────────────────────────────────┘
                                   │
                                   ▼
┌─────────────────────────────────────────────────────────────────────┐
│             Receive the first PDSCH and the second PDSCH             │──╴736
└─────────────────────────────────────────────────────────────────────┘
                                   │
                                   ▼
┌─────────────────────────────────────────────────────────────────────┐
│            Perform blind decoding for the PDCCH candidate            │──╴738
└─────────────────────────────────────────────────────────────────────┘
                                   │
                                   ▼
┌─────────────────────────────────────────────────────────────────────┐
│   Count the blind decoding toward a count for a reference CC of the   │──╴740
│               first CC and the second CC                             │
└─────────────────────────────────────────────────────────────────────┘
                                   │
                                   ▼
┌─────────────────────────────────────────────────────────────────────┐
│  Do not count the blind decoding toward a count for the other CC of   │──╴742
│            the first CC and the second CC                            │
└─────────────────────────────────────────────────────────────────────┘
```

FIG. 7B

FIG. 8

Europäisches
Patentamt

European
Patent Office

Office européen
des brevets

**Application Number**

**EP 23 15 9914**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/046673 A1 (TAKEDA KAZUKI [JP] ET AL) 10 February 2022 (2022-02-10) * paragraph [0056] * * paragraph [0064] * * paragraph [0070] * * paragraph [0083] – paragraph [0090]; figure 5 * * paragraph [0114] – paragraph [0119]; figure 8 * * paragraph [0203] – paragraph [0204]; figure 11 * | 1-10 | INV. H04L5/00 |
| X | QUALCOMM INCORPORATED: "Views on multi-cell PDSCH scheduling via a single DCI", 3GPP DRAFT; R1-2009278, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. E-meeting; 20201026 – 20201113 1 November 2020 (2020-11-01), XP052351198, Retrieved from the Internet: URL:https://ftp.3gpp.org/tsg_ran/WG1_RL1/TSGR1_103-e/Docs/R1-2009278.zip R1-2009278 Multi-cell PDSCH scheduling.docx [retrieved on 2020-11-01] * Section 3; figure 4 * | 1-10 | |

| TECHNICAL FIELDS SEARCHED (IPC) |
|---|
| H04L |

The present search report has been drawn up for all claims

| Place of search | Date of completion of the search | Examiner |
|---|---|---|
| The Hague | 18 July 2023 | Devillers, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9914

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2023

| Patent document cited in search report | | Publication date | Patent family member(s) | | Publication date |
|---|---|---|---|---|---|
| US 2022046673 | A1 | 10-02-2022 | CN | 116057883 A | 02-05-2023 |
| | | | EP | 4193557 A1 | 14-06-2023 |
| | | | US | 2022046673 A1 | 10-02-2022 |
| | | | WO | 2022032291 A1 | 10-02-2022 |

EPO FORM P0459

For more details about this annex : see Official Journal of the European Patent Office, No. 12/82